(19) **Europäisches Patentamt / European Patent Office / Office européen des brevets**

(11) **EP 2 246 166 A1**

(12) **EUROPEAN PATENT APPLICATION**
published in accordance with Art. 153(4) EPC

(43) Date of publication:
**03.11.2010 Bulletin 2010/44**

(21) Application number: **09707942.0**

(22) Date of filing: **22.01.2009**

(51) Int Cl.:
**B28B 1/00** $^{(2006.01)}$    **B28B 11/08** $^{(2006.01)}$
**B29C 33/40** $^{(2006.01)}$    **B29C 41/02** $^{(2006.01)}$

(86) International application number:
**PCT/JP2009/050960**

(87) International publication number:
**WO 2009/098946 (13.08.2009 Gazette 2009/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **24.01.2008 JP 2008013552**

(71) Applicant: **Itou, Hirobumi**
**Kikuchi-gun, Kumamoto 869-1225 (JP)**

(72) Inventor: **Itou, Hirobumi**
**Kikuchi-gun, Kumamoto 869-1225 (JP)**

(74) Representative: **Gendron, Vincent Christian et al**
**SA FEDIT-LORIOT ET AUTRES**
**38, avenue Hoche**
**75008 Paris (FR)**

(54) **PROCESS FOR PRODUCING CORRUGATED PLATE AND CORRUGATED PLATE**

(57) A method for manufacturing a wrinkled plate which can control a shape of wrinkles formed on a surface of the wrinkled plate and a wrinkled plate which is manufactured by the method are provided. The method for manufacturing a wrinkled plate 1a includes the steps of: placing an unhardened clay 5 having irregularities embossed on a surface thereof on an upper surface of a rubber sheet 4 in a stretched state in an overlapping manner; forming wrinkles 2 at least on a surface of the clay 5 by shrinking the rubber sheet 4; and hardening the clay 5 by baking.

Fig. 1

**Description**

Technical Field

The present invention relates to a method for manufacturing a wrinkled plate having a complicated wrinkled shape on a surface thereof and a wrinkled plate, and more particularly to a method for manufacturing a wrinkled plate and a wrinkled plate which can control a shape of wrinkles formed on a surface of the wrinkled plate.

Background Art

The applicant of the present application disclosed a method for manufacturing a plate having a complicated wrinkled shape on a surface thereof in patent document 1.

According to this patent document 1, clay is placed on an upper surface of a rubber sheet in a stretched state, and an upper surface of the clay is covered with a surface layer which is removable by burning. Next, the rubber sheet is shrunken so as to form wrinkles on the upper surface of the clay and the surface layer and, thereafter, the clay is burnt and, at the same time, the surface layer is vanished by burning thus acquiring a wrinkled plate having a complicated wrinkled shape on a surface thereof.

Further, the applicant of the present application disclosed a method for manufacturing a wrinkled plate in patent document 2. In the method, clay is placed on a rubber sheet in a stretched state and, thereafter, the rubber sheet is shrunken halfway thus forming first wrinkles having relatively small waviness on an upper surface of the clay. Subsequently, the clay is dried slightly thus further shrinking the rubber sheet so as to form second wrinkles having relatively large waviness on an upper surface of the clay. Due to such a manufacturing method, the first wrinkles having relatively small waviness are formed on the surface of the second wrinkles having relatively large waviness and hence, it is possible to acquire a wrinkled plate having a more complicated wrinkled shape on a surface thereof.

    Patent document 1: JP 2004-261964 A
    Patent document 2: JP 2006-7475 A

Disclosure of Invention

Task to be solved by the Invention

However, in the invention disclosed in patent document 2, the first wrinkles having relatively small waviness are formed by shrinking the rubber sheet and hence, it is difficult to control a shape of the first wrinkles such as a distance between the wrinkles and the degree of waviness of the wrinkles.

Accordingly, it is an object of the present invention to provide a method for manufacturing a wrinkled plate and a wrinkled plate which can control a shape of wrinkles formed on a surface of the wrinkled plate.

Means for solving the Task

The invention called for in claim 1 is directed to a method for manufacturing a wrinkled plate which includes the steps of: placing an unhardened support substrate having irregularities embossed on a surface thereof on an upper surface of a stretchable functional member in a stretched state in an overlapping manner; and forming wrinkles at least on a surface of the support substrate by shrinking the stretchable functional member; and hardening the support substrate.

Further, the invention called for in claim 2 is, in the method for manufacturing a wrinkled plate called for in claim 1, **characterized in that** embossing of the irregularities is performed by adhering a woven fabric to the upper surface of the unhardened support substrate.

Further, the invention called for in claim 3 is, in the method for manufacturing a wrinkled plate called for in claim 1, **characterized in that** embossing of the irregularities is performed by pressing an embossing plate on which irregularities are preliminarily formed to the upper surface of the unhardened support substrate.

Further, the invention called for in claim 4 is, in the method for manufacturing a wrinkled plate called for in any one of claims 1 to 3, **characterized in that** the step of forming the wrinkles at least on the surface of the support substrate by shrinking the stretchable functional member includes: a step of semi-hardening the unhardened support substrate; and a step of forming first wrinkles on the upper surface of the semi-hardened support substrate by shrinking the stretchable functional member halfway; and a step of forming second wrinkles larger than the first wrinkles on the surface of the support substrate by further shrinking the stretchable functional member.

Further, the invention called for in claim 5 is directed to a method for manufacturing a wrinkled plate which includes the steps of: placing an unhardened support substrate to which an irregular surface sheet having irregularities preliminarily formed thereon is adhered on an upper surface of a stretchable functional member in a stretched state in an overlapping manner; and formingwrinkles at least on a surface of the support substrate by shrinking the stretchable functional member; and hardening the support substrate.

Further, the invention called for in claim 6 is, in the method for manufacturing a wrinkled plate called for in any one of claims 1 to 5, **characterized in that** the support substrate is made of clay.

Further, the invention called for in claim 7 is directed to a method for manufacturing a wrinkled plate which includes the steps of: interposing an intermediate layer which is extensible and shrinkable, is removable by post treatment and has an irregular shape projecting toward the support substrate on a surface thereof between a stretchable sheet in a stretched state and an unhardened support substrate which is placed on an upper surface of the stretchable sheet in an overlapping manner; forming wrinkles at least on a surface of the support substrate by shrinking the stretchable sheet; and hardening the support substrate.

Further, the invention called for in claim 8 is, in the method for manufacturing a wrinkled plate called for in any one of claims 1 to 7, **characterized in that** the surface of the support substrate is covered with a coating material.

Further, the invention called for in claim 9 is directed to a method for manufacturing a wrinkled plate which includes the steps of: placing an intermediate layer which is extensible and shrinkable and is removable by post treatment on a stretchable functional member in a stretched state; adhering a sheet-shaped resilient member on an upper surface of the intermediate layer; forming wrinkles on the resilient member by shrinking the stretchable functional member; covering an upper surface of the resilient member with an unhardened lining material; and hardening the unhardened lining material.

Further, the invention called for in claim 10 is directed to a wrinkled plate in which a large number of irregular wrinkles attributed to protuberance are continuously formed at least on a surface of the wrinkled plate, a large number of minute irregularities are formed on a surface of each wrinkle, and a distance between the neighboring wrinkles of the large number of wrinkles attributed to protuberance is set such that the distance at bottom portions of the wrinkles is larger than the distance at expanded portions of the wrinkles.

Advantages of the Invention

According to the invention called for in claim 1, the large number of complicated-shaped wrinkles attributed to shrinking of the stretchable functional member are formed on the surface of the hardened support substrate and, at the same time, minute wrinkles attributed to irregularities forming embossing are formed on the surface of each formed wrinkle. Accordingly, by applying irregularities forming embossing which has a preliminarily desired shape to the unhardened support substrate, it is possible to acquire the wrinkled plate having wrinkles of a desired shape.

According to the invention called for in claim 2, the irregular shape of the surface of the woven fabric is formed on the upper surface of the unhardened support substrate. Accordingly, by adhering the woven fabric having the desired surface shape to the upper surface of the unhardened support substrate, it is possible to acquire the wrinkled plate having wrinkles of a desired shape. Further, at the time of shrinking the unhardened support substrate, the woven fabric which is adhered to the upper surface of the unhardened support substrate is also shrunken in the same manner and hence, it is possible to form the large number of wrinkles on the surface of the support substrate while preventing the wrinkles from coming into contact with each other.

According to the invention called for in claim 3, embossing of the irregularities is performed by pressing the embossing plate on which irregularities are preliminarily formed to the upper surface of the unhardened support substrate. Accordingly, by embossing the upper surface of the unhardened support substrate using the embossing plate on which desired irregularities are formed, it is possible to acquire the wrinkled plate having wrinkles of a desired shape.

According to the invention called for in claim 4, it is possible to form the wrinkles of more complicated shapes on the surface of the plate while controlling a shape of the wrinkles formed on the surface of the plate.

According to the invention called for in claim 5, the irregular shape of the surface of the irregular surface sheet is formed on the upper surface of the unhardened support substrate and hence, by adhering the irregular surface sheet having a desired surface shape to the upper surface of the unhardened support substrate, it is possible to acquire the wrinkled plate having wrinkles of a desired shape. Further, at the time of shrinking the unhardened support substrate, the irregular surface sheet which is adhered to the upper surface of the unhardened support substrate is also shrunken in the same manner and hence, it is possible to form the large number of wrinkles on the surface of the support substrate while preventing the wrinkles from coming into contact with each other.

According to the invention called for in claim 6, by forming the support substrate using clay, it is possible to form the wrinkles on the surface of the clay by placing the support substrate on the upper surface of the stretchable functional member and by shrinking the stretchable functional member in an unhardened state and, at the same time, it is possible to harden the support substrate by drying or baking. Further, when the woven fabric is adhered to clay in an unhardened state, the woven fabric is vanished by baking and hence, the removal of the woven fabric becomes unnecessary leading to the more efficient manufacture of the wrinkled plate.

According to the invention called for in claim 7, the irregular shape of the surface of the intermediate layer is formed on the lower surface of the unhardened support substrate and hence, by interposing the intermediate layer having a desired surface shape between the stretchable sheet and the unhardened support substrate, it is possible to acquire the wrinkled plate having wrinkles of a desired shape. Further, at the time of shrinking the unhardened support substrate, the intermediate layer which is placed on the lower surface of the unhardened support substrate is also shrunken in the same manner and hence, it is possible to form the large number of wrinkles on the surface of the support substrate while preventing the wrinkles from coming into contact with each other. Still further, by adhering the surface layer which is shrinkable, is removable after post treatment, and has an irregular shape on the surface thereof to the upper surface of the unhardened support substrate, it is possible to acquire the wrinkled plate which forms wrinkles of a desired shape on both surfaces thereof.

According to the invention called for in claim 8, by covering the surface of the unhardened support substrate with a radio wave transmission material, for example, it is possible to form a shape of the surface of the wrinkled plate into a desired shape which is not influenced by the wrinkles formed on the plate while maintaining the radio wave absorbing performance. That is, for example, by forming the surface of the wrinkled plate into an approximately smooth surface by covering the surface of the wrinkled plate with the radio wave transmission material, it is possible to increase strength of the wrinkled plate and, at the same time, it is possible to prevent the adhesion of smears and hence, the wrinkled plate is effectively applicable to the a radio wave absorbing and insulating wall which prevents a medical device from being erroneously operated due to the influence of a radio wave exerted on the medical device or the like. Further, by covering the surface of the hardened support substrate with a foamed resin material such as foamed styrene or foamed urethane, it is possible to use the wrinkled plate as an acoustic insulation wall of a drawing room of an ordinary household or an audio room.

According to the invention called for in claim 9, by applying the lining material to the resilient member after forming the wrinkles on the sheet-shaped resilient member, it is possible to hold a shape of the wrinkles formed on the resilient member and, at the same time, it is possible to acquire the wrinkled plate having a desired thickness at a manufacturing stage so that it is unnecessary to perform an operation to remove an undesired portion as the post treatment whereby the manufacturing efficiency can be enhanced and, at the same time, a manufacturing cost can be suppressed. Further, it is sufficient that the resilient member is a sheet-shaped member having resiliency and hence, the degree of freedom is high in the selection of material whereby it is possible to manufacture the wrinkled plate which conforms to various applications. Further, the intermediate layer can be recycled and hence, the wrinkled plate can be manufactured at a lower cost.

According to the invention called for in claim 10, it is possible to provide the wrinkled plate which exhibits the excellent radio wave absorbing performance, and can absorb an electromagnetic wave of desired frequency by controlling a shape of a large number of minute irregularities formed on the surface of each wrinkle.

Brief Explanation of Drawings

Fig. 1 is a view showing manufacturing steps of a wrinkled plate according to an embodiment 1.
Fig. 2 is a view showing the constitution of a woven fabric in the embodiment 1.
Fig. 3 is an enlarged view of an area in the vicinity of a surface of clay at a stage in Fig. 1(c).
Fig. 4 is an enlarged view of an area in the vicinity of a surface of a wrinkled plate at a stage in Fig. 1(d).
Fig. 5 is an appearance view of the wrinkled plate according to the embodiment 1.
Fig. 6 is a graph which shows a result of measurement with respect to the radio wave absorbing performance of the wrinkled plate according to the embodiment 1.
Fig. 7 is a view showing the constitution of an embossing plate according to an embodiment 2.
Fig. 8 is a view showing a variation of the constitution according to the embossing plate of the embodiment 2.
Fig. 9 is a view showing manufacturing steps of a wrinkled plate according to a fourth embodiment.
Fig. 10 is an enlarged side view of the wrinkled plate according to the fourth embodiment.
Fig. 11 is a view showing manufacturing steps of a wrinkled plate according to a fifth embodiment.
Fig. 12 is a view showing manufacturing steps of a wrinkled plate according to a sixth embodiment.
Fig. 13 is an enlarged side view of a wrinkled plate according to a seventh embodiment.
Fig. 14 is an enlarged side view of a wrinkled plate according to an eighth embodiment.

Explanation of Symbols

1a, 1d, 1e, 1f, 1g, 1h: wrinkled plate
2: wrinkles
3: protruding portion
4: rubber sheet
5: clay
6: woven fabric
7: fibrous body
10: embossing plate
18: first wrinkles
19: second wrinkles

Best Mode for Carrying Out the Invention

(Embodiment 1)

[1. Method for manufacturing wrinkled plate]

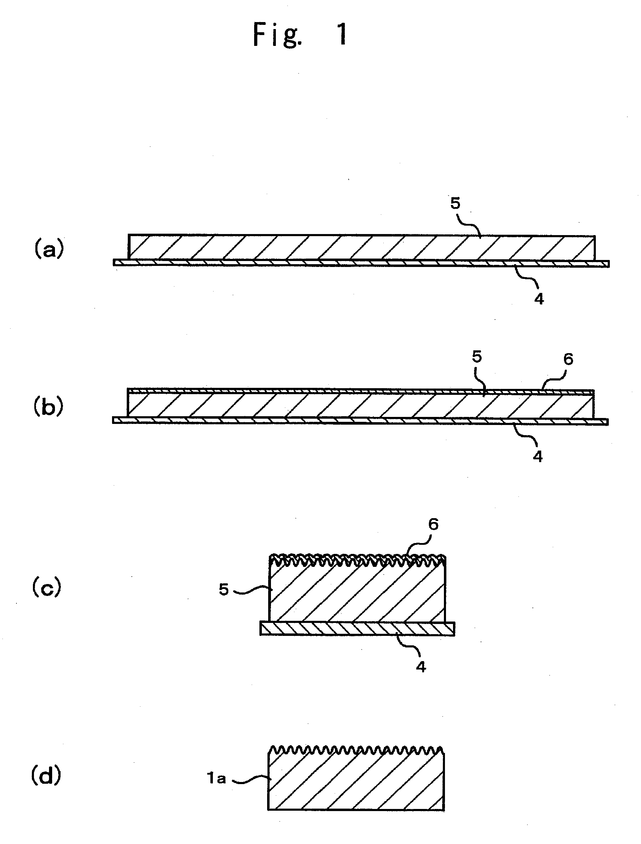

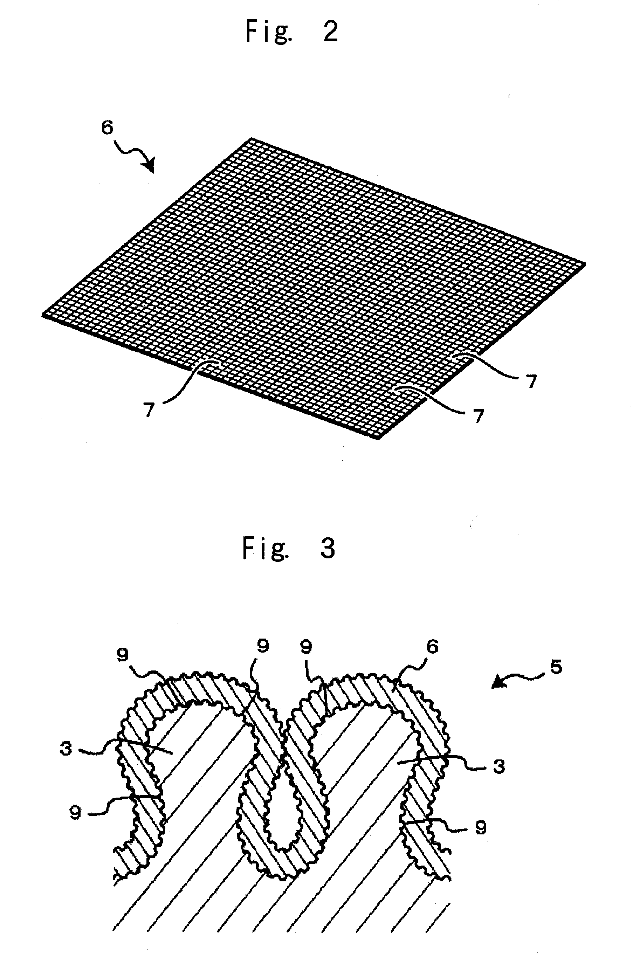

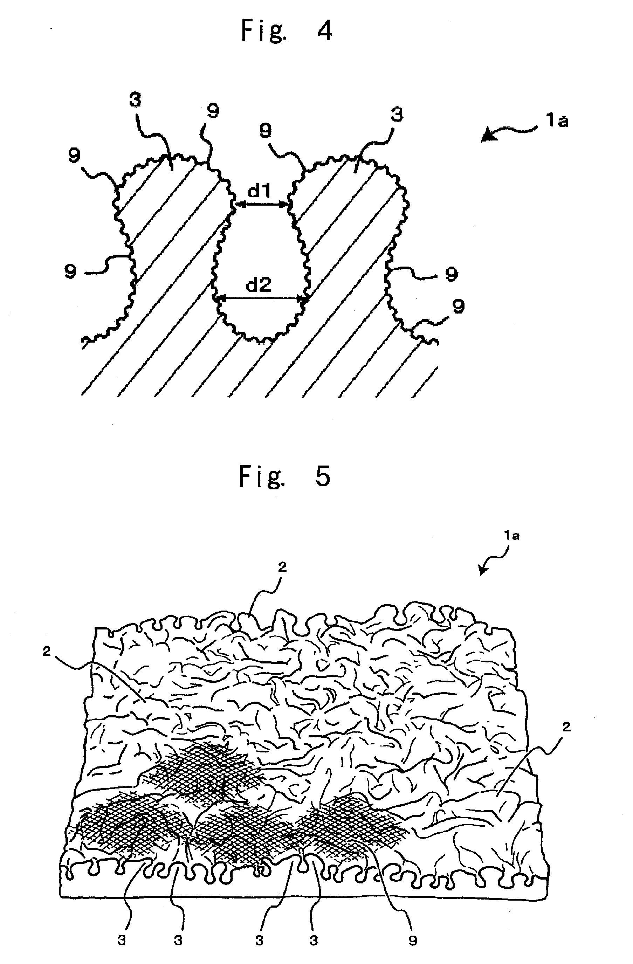

Hereinafter, a method for manufacturing a wrinkled plate according to this embodiment is specifically explained in conjunction with Fig. 1 to Fig. 4. Fig. 1 is a view showing manufacturing steps of the wrinkled plate according to this embodiment, Fig. 2 is a view showing the constitution of a woven fabric in this embodiment, Fig. 3 is an enlarged view of an area in the vicinity of a surface of clay 5 at a stage in Fig. 1(c), and Fig. 4 is an enlarged view of an area in the vicinity of a surface of a wrinkled plate at a stage in Fig. 1(d).

In manufacturing the wrinkled plate according to this embodiment, firstly, as shown in Fig. 1(a), clay 5 which constitutes a support substrate is placed on an upper surface of a rubber sheet 4 which constitutes a stretchable functional member having stretchability in an overlapping manner.

The clay 5 is hardened by drying so that the clay 5 is in an unhardened state at a stage shown in Fig. 1(a).

Further, the clay 5 contains organic compound powder such as starch or wheat flour and an iron compound such as iron oxide ($Fe_2O_3$) which constitutes inorganic compound powder. These organic compound powder compound and inorganic compound powder are turned into carbon (C) and iron (Fe) respectively by reduction baking. That is, a pottery plate which contains carbon and iron is formed by such baking.

Here, carbon and iron function as a radio wave absorbing material and hence, a radio wave which is incident on an upper surface of the wrinkled plate which contains these components is absorbed by the wrinkled plate when the radio wave propagates in the inside of the wrinkled plate. Accordingly, the radio wave absorbing performance of the wrinkled plate can be enhanced. Here, any material can be used as the radio wave absorbing material provided that the material has the radio wave absorbing performance and, for example, ferrite powder, titanium oxide or the like may be used in place of carbon or iron.

In placing the unhardened clay 5 on an upper surface of the rubber sheet 4, the rubber sheet 4 is held in a stretched state. Whether the stretching direction of the rubber sheet 4 is to be set to the one dimensional direction (rectilinear direction) or two dimensional directions (planar direction) is suitably selected based on a kind of wrinkles formed on a surface of a product. When the rubber sheet 4 is stretched in the one dimensional direction, wrinkles having an approximately corrugated shape can be formed on the surface of the product. On the other hand, when the rubber sheet 4 is stretched in the two dimensional direction, complicate-shaped wrinkles constituted of a large number of protruding portions each of which bulges in an opening-squeezed pouch shape can be formed on the surface of the product. Further, even when the rubber sheet 4 is stretched in the two dimensional direction, it is not always necessary to set a stretching amount of the rubber sheet 4 in the predetermined direction and a stretching amount of the rubber sheet 4 in the direction orthogonal to the predetermined direction equal to each other. By making the stretching amounts of the rubber sheet 4 in both directions different from each other, it is possible to make a shape of the wrinkles formed on the surface of an obtained product different corresponding to the difference in the stretching amounts of the rubber sheet 4.

The clay 5 is placed on the upper surface of the rubber sheet 4 having the above-mentioned constitution, and a thickness size of the clay 5 and the distribution of the thickness size are appropriately set corresponding to a shape of a product to be obtained. In this case, the thickness size of the clay 5 may be set smaller than a thickness size of a product to be obtained. Although the distribution of the thickness size may be set arbitrarily, the distribution of the thickness size is set uniform in general. In such a state, a lower surface of the clay 5 and the upper surface of the rubber sheet 4 are brought into close contact with each other.

Here, embossing of irregularities is applied to the upper surface of the clay 5 placed on the upper surface of the rubber sheet 4. In this embodiment, this embossing of irregularities is performed by adhering a woven fabric 6 having a mesh-like meshes to the upper surface of the clay 5 as shown in Fig. 1(b). The woven fabric 6 according to this embodiment is a fibrous material constituted of numerous fibrous bodies 7, wherein the woven fabric 6 has relatively coarse meshes like a gauze and warp threads and weft threads are interwoven at approximately equal intervals respectively and orthogonal to each other as shown in Fig. 2. Further, the woven fabric 6 is a material which is vanished by combustion when the clay 5 is baked. To be more specific, as the woven fabric 6, a gauze, a fabric, a non-woven fabric having a weaving pattern, silk or the like can be used.

By adhering such a woven fabric 6 to the upper surface of the clay 5, minute irregularities formed by such fibrous bodies 7 are embossed to the upper surface of the clay 5. That is, the clay 5 intrudes into irregularities or minute spaces in the woven fabric 6 which are formed by the entanglement of the fibrous bodies 7 of the woven fabric 6.

In this manner, a shape, a size, a depth and the like of the irregularities formed on the surface of the clay 5 can be made changed depending on weaving of the woven fabric 6 or a diameter or twisting of the fibrous bodies 7 and hence, it is possible to control the minute irregularities by selecting the woven fabric 6.

When the clay 5 is adhered to the upper surface of the stretched rubber sheet 4 and the woven fabric 6 is adhered to the upper surface of the clay 5 as described above, the rubber sheet 4 is shrunken thereafter.

Since the upper surface of the rubber sheet 4 and the lower surface of the clay 5 are adhered to each other by an adhesive force of the clay 5, when the rubber sheet 4 is shrunken, a force in the shrinking direction is applied to the lower surface of the clay 5 which is placed on the upper surface of the rubber sheet 4. Accordingly, a force in the compressive direction is applied to the clay 5 in the planar direction. Even in such a state, the lower surface of the clay 5 is brought into the upper surface of the rubber sheet 4 and is held in an adhered state in a close contact state and hence, a planar shape of the clay 5 is decreased along with the shrinkage of the rubber sheet 4 whereby the clay 5 is plastically deformed in the direction where the thickness of the clay 5 is increased. During this plastic deformation, a stress in the buckling direction is applied to the upper surface of the clay 5 and the woven fabric 6 which are not supported at all different from the lower surface of the clay 5 which is supported by the rubber sheet 4. Then, based on this stress, as shown in Fig. 1(c), the wrinkles are formed on the upper surface of the clay 5 and the woven fabric 6 which covers the upper surface of the clay 5.

In this case, since the woven fabric 6 is adhered to the upper surface of the clay 5, there is no possibility that portions of the clay 5 are brought into direct contact with each other at peak portions of the large number of protruding portions. That is, as shown in Fig. 3, even when the peak portions of the respective protruding portions 3, 3 are brought into contact with each other, the woven fabric 6 is present at a contact portion.

Next, by inserting a thin plate between the lower surface of the clay 5 and the upper surface of the rubber sheet 4 or the like, the clay 5 is taken out from the upper surface of the rubber sheet 4 together with the woven fabric 6 and is transferred to an upper surface of a receiving plate provided separately and having sufficient heat resistance (although not shown in the drawing, a planar plate made of carborundum or iron in general or a wooden planar plate when a transfer operation is performed before baking). Then, the clay 5 and the woven fabric 6 are put into a furnace and are heated together with the receiving plate (after sufficiently performing drying treatment when necessary) thus baking the clay 5. A heating temperature of such heating is determined arbitrarily corresponding to a kind of the clay 5 or the like in the same manner as a temperature at the time of baking a clay tile or a porcelain in general, and is set to approximately 1000°C, for example. The heating temperature may be suitably determined based on a using material, a required strength or the like. For example, the temperature of 600°C or more may be used at the time of baking clay, and the temperature of approximately 1700°C may be used at the time of baking fine ceramics.

Due to such baking, as shown in Fig. 1(d), the clay 5 is hardened so that the wrinkled plate 1a is completed. Here, the complicate-shaped wrinkles are formed on the surface of the hardened clay 5 due to the shrinkage of the rubber sheet 4 and, at the same time, the minute wrinkles are formed on the surface of each formed wrinkle due to the irregularities of the woven fabric 6. Accordingly, by applying the embossing of irregularities having a desired shape to the upper surface of the unhardened clay 5, it is possible to acquire the wrinkled plate 1a having wrinkles of a desired shape.

Further, during baking the clay 5, the woven fabric 6 placed on the upper surface of the clay 5 is vanished by burning. Accordingly, in a state where the wrinkled plate 1a is completed, as shown in Fig. 4, a gap surely exists between the peak portions of the respective protruding portions 3, 3. That is, the large number of protruding portions 3 which constitute the wrinkles surely have opening on a surface portion of the wrinkled plate 1a. Due to such a constitution, when the wrinkled plate 1a is used as a radio wave absorber, for example, by allowing a radio wave to advance to deep portions of the respective recessed portions 1, the absorption of the radio wave can be performed more efficiently thus enhancing the radio wave absorbing performance of the wrinkled plate 1a.

Further, in this embodiment, the clay 5 is used as the material of the support substrate and hence, in an unhardened state, the mounting of the clay 5 on the upper surface of the rubber sheet 4 and the formation of the wrinkles on the surface of the clay 5 due to the shrinkage of the rubber sheet 4 can be easily performed. Further, the clay 5 has the property that the clay 5 is hardened when the clay 5 is dried or baked and hence, in the step of baking the clay 5, the clay 5 can be hardened and, at the same time, the woven fabric 6 adhered to the upper surface of the clay 5 is vanished by baking whereby the removal of the woven fabric 6 becomes unnecessary leading to the more efficient manufacture of the wrinkled plate.

By changing the thickness of the woven fabric 6, it is possible to control a distance between the peak portions of the protruding portions 3, 3 to be formed on the upper surface of the product to be obtained. To be more specific, the thickness of the woven fabric 6 is increased to increase the distance between the peak portions of the protruding portions 3, 3. When the wrinkles are formed on the upper surface of the clay 5, the woven fabric 6 is collapsed more or less by pushing between the peak portions of the neighboring protruding portions 3, 3. Accordingly, the thickness of the woven fabric 6 is set to a value slightly larger than 1/2 of the distance between the peak portions of the neighboring protruding portions 3, 3.

Further, the support substrate which becomes the material for constituting the wrinkled plate 1a may be formed by suitably using mortar (concrete), fine ceramic, glass powder, metal powder, wood powder (saw chips), rubber, biomaterial or the like depending on usage. Among these materials, with respect to fine ceramic, glass powder, metal powder and wood powder, the material is mixed with a suitable binder (adhesive agent) thus forming a gel-like (glue-like) substance, wrinkles are formed on a surface of the substance, and the substance is hardened. As a means for hardening the substance, sintering, baking, drying, curing or the like is selected corresponding to a kind of the above-mentioned material or a kind of the binder. The metal powder may be formed into sintered metal by sintering the metal powder with a suitable binder. Further, wood powder may be mixed with a suitable synthetic resin, wrinkles are formed on wood powder and, thereafter, solidified. A solidified material may be used as a wall plate having the excellent acoustic absorbing performance. Further, by using electrically conductive rubber which contains electrically conductive material powder made of carbon or the like as the rubber, it is possible to acquire an ornamental material which has the excellent electromagnetic wave absorbing performance. Further, the above-mentioned biomaterial can contribute to the realization of an artificial internal organ such as an artificial kidney or an artificial lung by making use of a large surface area.

Further, the support substrate may be formed using a synthetic resin which is hardened by post treatment such as a thermosetting resin, an ultraviolet-ray setting resin or an infrared-ray setting resin.

In forming the support substrate using the synthetic resin, the support substrate can be manufactured by steps similar to the steps for forming the support substrate using the clay 5. That is, firstly, the unhardened synthetic resin is placed on an upper surface of a rubber sheet 4 in an overlapping manner with the rubber sheet 4 held in a stretched state, and a woven fabric is adhered to an upper surface of the synthetic resin. Next, wrinkles are formed on the upper surface of the synthetic resin and the woven fabric by shrinking the rubber sheet 4 and, thereafter, the synthetic resin is hardened.

Here, hardening of the synthetic resin is performed by heating when the thermosetting resin is used as the synthetic resin, and is performed by the radiation of ultraviolet rays when the ultraviolet-ray setting resin is used as the synthetic resin, for example. By hardening the synthetic resin in this manner, it is possible to form the synthetic-resin-made wrinkled plate.

Further, in such a case, there arises a state where the woven fabric remains on a surface of the wrinkled plate thus providing the wrinkled plate having highly aesthetic appearance where the resin and fibers are integrally formed with each other. Here, as the synthetic resin, to be more specific, an acrylic resin, asiliconresin, aphenolresin, anepoxyresin, anurethane resin or the like can be used.

The woven fabric may be removed from the surface of the wrinkled plate without leaving the woven fabric on the surface of the wrinkled plate as described above. As a method for removing the woven fabric, it is possible to use a method which decomposes the woven fabric using enzyme after wrinkles are formed on the upper surface of the synthetic resin and the woven fabric, a method which physically removes the woven fabric by a human hand before the synthetic resin is completely hardened (semi-hardened), a method which removes the woven fabric by hardening the synthetic resin and, thereafter, washing away the woven fabric using water, a solvent, acid, alkali or the like. By using these methods, it is possible to remove the woven fabric without collapsing a shape of wrinkles formed on the upper surface of the synthetic resin.

[2. Structure of wrinkled plate]

On the surface (incident surface on which a radio waver or a sonic wave is incident) of the wrinkled plate manufactured by the above-mentioned manufacturing method, as shown in Fig. 5, a large number of irregular or untidy wrinkles 2 attributed to protuberance are continuously formed, and a large number of minute irregularities 9 are formed on the surface of each wrinkle 2. Further, as shown in Fig. 4, a distance between the neighboring wrinkles 2 of a large number of wrinkles 2 attributed to protuberance is set such that a distance d2 at bottom portions of the wrinkles 2 is larger than the distance d1 at expanded portions of the wrinkles.

Due to such a constitution, it is possible to provide the wrinkled plate which exhibits the excellent radio wave absorbing performance and the excellent sound absorbing performance, and can absorb an electromagnetic wave or a sound wave of desired frequency by controlling an average distance between the respective wrinkles 2 or a shape of minute irregularities 9 formed on the surface of each wrinkle 2.

[3. Radio wave absorbing performance of wrinkled plate]

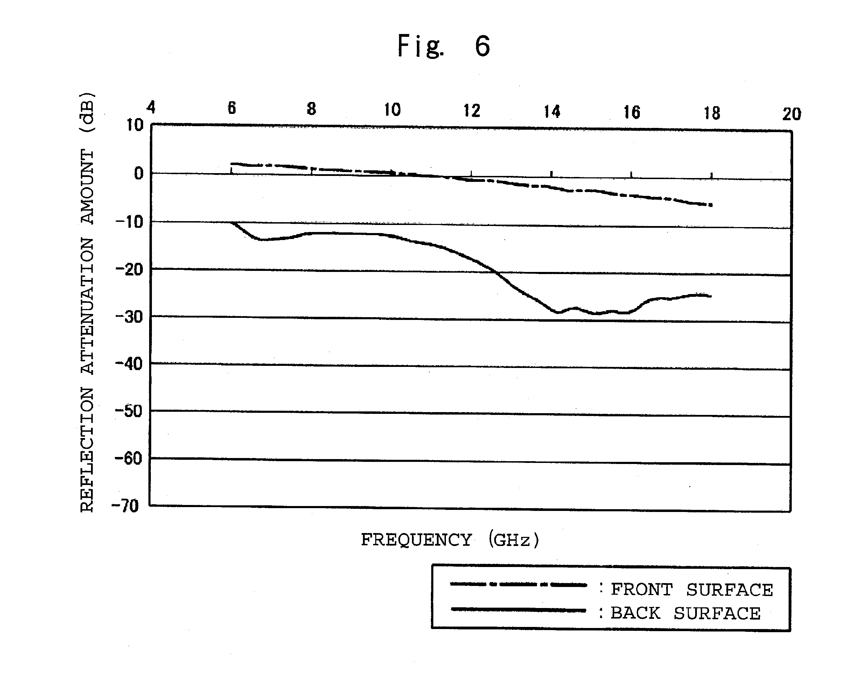

The wrinkled plate 1a which is formed in the above-mentioned manner exhibits the particularly excellent radio wave absorbing performance and is useful as a so-called radio wave absorber. Hereinafter, the radio wave absorbing performance of the wrinkled plate 1a according to this embodiment is explained in conjunction with Fig. 6. Fig. 6 is a graph which shows a result of measurement with respect to the radio wave absorbing performance of the wrinkled plate 1a of the embodiment.

This measurement uses a network analyzer E8362B made by Agilent Technologies Inc. A radio wave of 6 to 18GHz is vertically incident on the wrinkled plate 1a and the attenuation characteristic of a reflection wave is measured by detecting the reflection wave reflected on the wrinkled plate 1a. In this measurement, the measurement is applied not only to a front surface (surface on which the wrinkles are formed) of the wrinkled plate 1a but also to a back surface (plane on which wrinkles are not formed) in the same manner.

Further, the attenuation characteristic of the reflection wave is taken on an axis of coordinates of a graph shown in Fig. 6, and such attenuation characteristic is obtained by a following formula.

$$10\log\{\text{reflection from wrinkled plate/reflection from aluminum plate having the same size as wrinkled plate}\} \ (dB)$$

Here, attenuation characteristic of -10dB implies that energy of the reflection radio wave from the wrinkled plate 1a takes a value expressed by a following formula compared with the reflection radio wave from the aluminum plate.

$$\{\text{reflection from wrinkled plate/reflection from aluminum plate}\} = 10^{-1} = 1/10$$

Attenuation characteristic of -20dB implies that energy of the reflection radio wave from the wrinkled plate 1a takes a value expressed by a following formula compared with the reflection radio wave from the aluminum plate.

$$\{\text{reflection from wrinkled plate/reflection from aluminum plate}\} = 10^{-2} = 1/100$$

As shown in Fig. 6, it is confirmed that the front surface side of the wrinkled plate 1a exhibits the attenuation characteristic of 20dB or more in a band of 13GHz or more. Further, as can be clearly understood from the comparison between the reflection attenuation amount of the front surface and the reflection attenuation amount of the back surface, no attenuation effect is found on the planar back surface so that it is understood that the reflection attenuation effect of the wrinkled plate 1a according to this embodiment is brought about by the complicated wrinkled shape formed on the front surface of the wrinkled plate 1a.

Further, in this measurement, the favorable attenuation characteristic is also recognized with respect to a radio wave having a wavelength corresponding to an average distance between wrinkles formed on the front surface. Accordingly, by controlling the shape of the wrinkles formed on the front surface as in the case of this manufacturing method of this embodiment, it is possible to manufacture the wrinkled plate 1a which can absorb the radio wave of desired frequency.

Here, currently, the radio wave absorber is used by selecting a suitable material corresponding to frequency of a radio wave to be attenuated in general. For example, as a wall surface panel for preventing a ghost in surface wave television broadcasting, a panel having favorable radio wave absorbing performance suitable for a frequency band of 93 to 220MHz is selectively used. Here, to take facts that the wrinkled plate according to this embodiment exhibits the favorable radio wave absorbing performance of 20dB or more in the frequency band of 13GHz or more, a material of the wrinkled plate is porcelain so that the wrinkled plate is brittle and the like into consideration, the use of the wrinkled plate in fixed facilities such as building is considered most promising.

(Embodiment 2)

In the above-mentioned embodiment, the embossing of irregularities on the upper surface of the unhardened clay 5 is performed by adhering the woven fabric 6 to the upper surface of the clay 5. However, in place of such a method, the irregularities may be formed on the upper surface of the unhardened clay 5 by pressing an embossing plate on which irregularities are preliminarily formed.

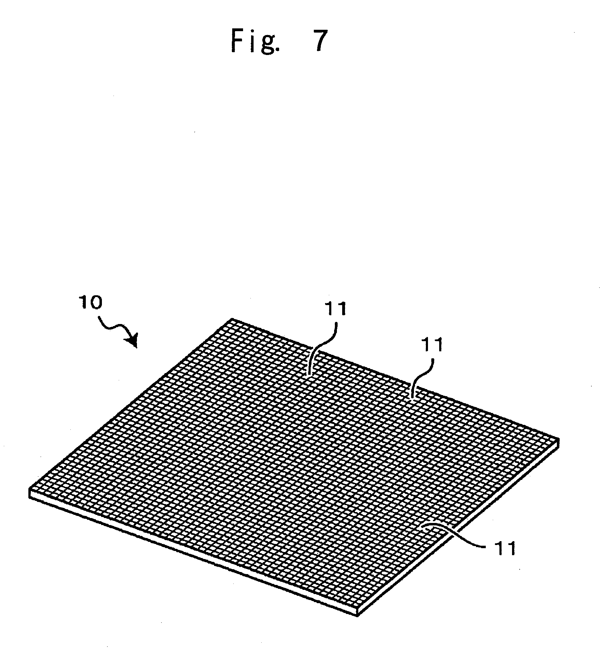

As shown in Fig. 7, the embossing plate 10 is a plate-like member made of silicon and recessed portions 11 having a predetermined depth are formed on a surface of the embossing plate 10 in a mesh shape.

In manufacturing the wrinkled plate according to this embodiment, the embossing plate 10 is brought into pressure contact with the upper surface of the unhardened clay 5 placed on a rubber sheet 4 thus forming the mesh-like irregularities on the upper surface of the clay 5. Then, after removing the embossing plate 10 from the upper surface of the clay 5, in the same manner as the above-mentioned embodiment, the rubber sheet 4 is shrunken thus forming wrinkles on the surface of the clay 5, and the clay 5 is hardened by baking thus completing the wrinkled plate. Further, in the same manner as the above-mentioned embodiment, the complicated-shaped wrinkles are formed on the surface of the hardened clay 5 due to shrinkage of the rubber sheet 4 and, at the same time, a large number of minute irregularities are formed on a surface of each formed wrinkle due to recessed portions 11 of the embossing plate 10.

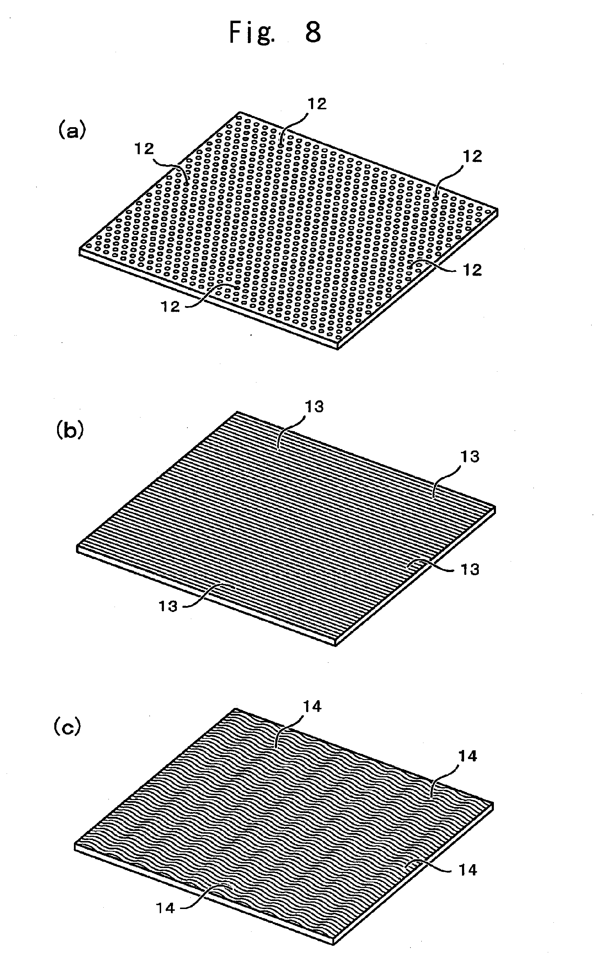

Here, as the embossing plate 10, besides the embossing plate which forms the mesh-like recessed portions 11 thereon as shown in Fig. 7, an embossing plate which forms small holes 12 on a surface thereof by embossing as shown in Fig. 8(a), an embossing plate which forms straight-line groove portions 13 on a surface thereof as shown in Fig. 8(b), an embossing plate which forms corrugated groove portions 14 on a surface thereof as shown in Fig. 8(c) or the like can also be used.

In this manner, by embossing the upper surface of the unhardened clay 5 using the embossing plate having the desired irregularities, it is possible to acquire the wrinkled plate having wrinkles of the desired shape. As a result, it is possible to manufacture the wrinkled plate which absorbs a radio wave having a desired wavelength band or to manufacture the wrinkled plate to which a desired pattern is applied to the surface thereof thus having high aesthetic appearance.

(Embodiment 3)

In the above-mentioned embodiment 2, the embossing of irregularities on the surface of the support substrate is performed by embossing the upper surface of the unhardened support substrate (clay 5) by the embossing plate 10. However, in place of such an embossing operation, it may be possible to perform an embossing operation by adhering an irregular surface sheet on which irregularities are preliminarily formed on the upper surface of the unhardened support substrate.

In such a case, firstly, the irregular surface sheet is adhered to the upper surface of the unhardened clay which is placed on a rubber sheet. The irregular surface sheet is formed using a material which is vanished when the clay is baked, and recessed portions having a mesh shape, an emboss shape, a straight-line shape or a corrugated shape are formed on a surface of the irregular surface sheet. Further, a thickness of the irregular surface sheet is set small to an extent that wrinkles are formed on the irregular surface sheet together with the clay due to the shrinkage of the rubber sheet.

Then, in the same manner as the above-mentioned embodiment, wrinkles are formed on the surface of the clay and the irregular surface sheet by shrinking the rubber sheet, and the clay is hardened by baking thus completing the wrinkled plate. Here, in the same manner as the above-mentioned embodiment, a large number of minute wrinkles are formed due to shrinkage of the rubber sheet on the surface of the hardened clay, and a large number of minute irregularities are formed on a surface of each formed wrinkle due to recessed portions of the irregular surface sheet.

The irregular surface sheet is not always formed using a material which is vanished by baking. When an irregular surface sheet which is not vanished by baking is used, although the irregular surface sheet may be physically removed using a human hand or the like after the clay is hardened to some extent, it may be also possible to leave the irregular surface sheet on the upper surface of the clay. In such a case, the acquired wrinkled plate assumes a state where the irregular surface sheet partially or totally remains on the surface of the wrinkled plate and hence, the aesthetic appearance of the wrinkled plate can be enhanced.

(Embodiment 4)

The methods for manufacturing a wrinkled plate which have been explained in conjunction with the respective embodiments are particularly effective manufacturing methods when the clay 5 is used as the support substrate, wherein embossing of irregularities on the unhardened support substrate is applied to the upper surface of the unhardened support substrate using the woven fabric 6, the embossingplate 10 or the irregular surface sheet. However, when the support substrate is made of a synthetic resin, it is possible to manufacture a wrinkled plate more efficiently by performing embossing of irregularities by interposing an intermediate layer which is shrinkable, is removable by post treatment and has irregularities on a surface thereof between the rubber sheet 4 and the unhardened support substrate.

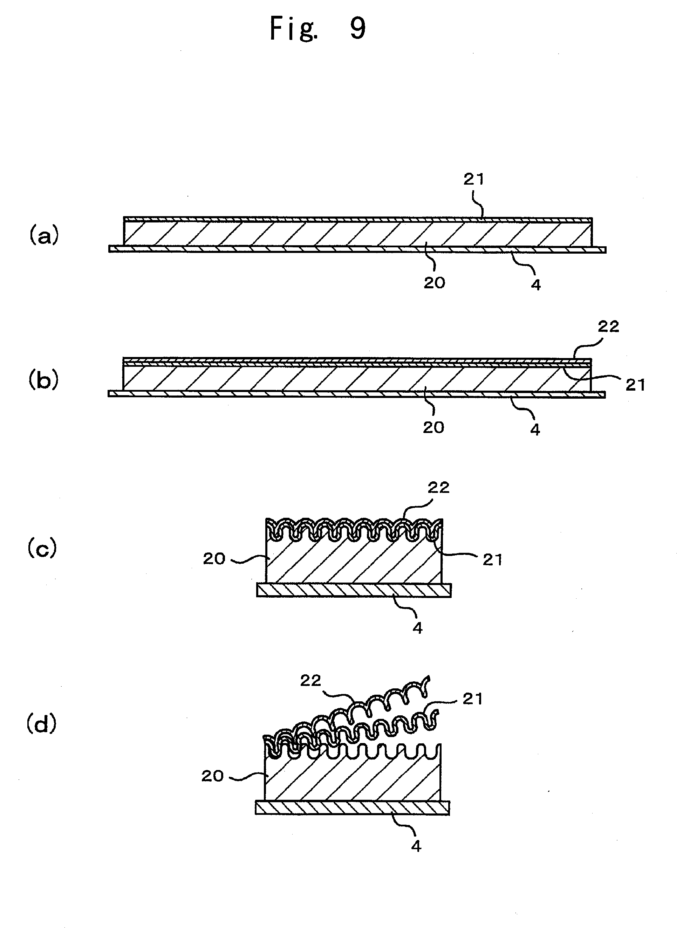

That is, firstly, as shown in Fig. 9(a), an intermediate layer 20 is interposed between an upper surface of the rubber sheet 4 and a lower surface of the synthetic resin 21 which constitutes the support substrate. As the synthetic resin 21, as described previously, a synthetic resin which possesses water repellency and gradually increases viscosity in the course of hardening such as a thermosetting resin, an ultraviolet ray setting resin or an infrared ray setting resin may be used. Further, the above-mentioned intermediate layer 20 is made of a material which is plastically deformable and shrinkable by a force in the compression direction and is removable by post treatment. Mesh-like minute recessed portions are formed on a surface of the intermediate layer 20 in the same manner as the woven fabric 6 and the embossing plate 10. As a specific material of the intermediate layer 20, it is possible to use various kinds of water-soluble gel-like substances such as various water-soluble glues including starch glue, a substance obtained by boiling and hardening agar or the like. Further, an upper surface of the synthetic resin 21 is covered with a surface layer 22 which is made of the same material as the above-mentioned intermediate layer 20 as shown in Fig. 9(b). The material of the surface layer 22 is not always equal to the material of the intermediate layer 20, and the surface layer 22 may be formed using the woven fabric 6, the embossing plate 10, the irregular surface sheet or the like. Further, the shape of irregularities formed on the surface of the surface layer 22 is not always equal to the shape of irregularities formed on the intermediate layer 20.

As described above, when the intermediate layer 20, the synthetic resin 21 and the surface layer 22 are placed on the upper surface of the rubber sheet 4 which is in a stretched state, the rubber sheet 4 is shrunken before the synthetic resin 21 is hardened (in a semi-hardened state). As a result, as shown in Fig. 9(c), the above-mentioned intermediate layer 20 shrinks while forming wrinkles on the upper surface thereof, and the above-mentioned synthetic resin 21 and surface layer 22 which are mounted on the upper surface of the intermediate layer 20 shrink while forming wrinkles on both upper and lower surfaces thereof. In the same manner as the previously-mentioned respective embodiments, distal end portions of the protruding portions which constitute wrinkles formed on both upper and lower surfaces of the synthetic resin 21 in the above-mentioned manner do not come into direct contact with each other. Then, the synthetic resin 21 which forms wrinkles on both upper and lower surfaces thereof is hardened in a state where the synthetic resin 21 is sandwiched between the intermediate layer 20 and the surface layer 22.

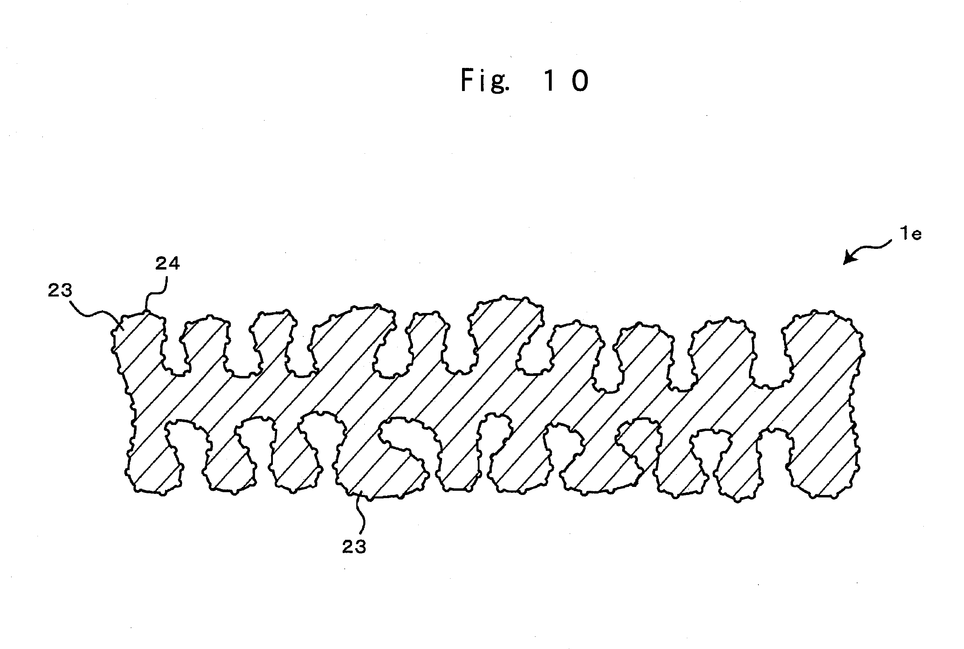

In this manner, after the synthetic resin 21 is hardened in a state a large number of wrinkles are formed on both upper and lower surfaces thereof, as shown in Fig. 9(d), the intermediate layer 20 and the surface layer 22 are removed. This removal operation is carried out by spraying water to both upper and lower surfaces of the synthetic resin 21 or by immersing the synthetic resin 21 into hot water (when the intermediate layer 20 and the surface layer 22 are made of agar). In this manner, by removing the intermediate layer 20 and the surface layer 22 from both upper and lower surfaces of the synthetic resin 21, as shown in Fig. 10, the wrinkled plate 1e made of synthetic resin which forms a large number of wrinkles 23 on both surfaces thereof is acquired.

Due to such a constitution, the irregularities 24 attributed to the intermediate layer 20 or the surface layer 22 are formed on both surfaces of the synthetic resin 21 and hence, by interposing the intermediate layer 20 having the desired surface shape between the rubber sheet 4 and the synthetic resin 21, it is possible to acquire the wrinkled plate having wrinkles of a desired shape. Further, by adhering the surface layer 22 to the upper surface of the synthetic resin 21, it is also possible to acquire the wrinkled plate which forms wrinkles of a desired shape on both surfaces thereof. By covering, for example, an inner wall surface of a drawing room of an ordinary household or an audio room with such a wrinkled plate 1e, it is possible to enhance the acoustic characteristic while taking the aesthetic appearance of an inner surface of the room into consideration.

A wrinkled plate made of a synthetic resin which simply has a large number of wrinkles on a surface thereof may be manufactured by injection molding. In this case, however, it is necessary to configure the wrinkled plate such that a width (diameter) of an opening portion is set equal to or larger than a width (diameter) of a deep portion with respect to a cross-sectional shape of the recessed portions having a large number of wrinkles. In other words, it is impossible to form the wrinkled plate made of a synthetic resin of this embodiment which has a large number of wrinkles where a cross-sectional shape of the recessed portion has an opening-squeezed pouch shape. According to the method for manufacturing a wrinkled plate of this embodiment, it is possible to acquire the wrinkled plate having the shape not obtainable by injection molding which is a common manufacturing method of a synthetic resin product.

(Embodiment 5)

The explanation has been made with respect to the method which manufactures the wrinkled plate using the support substrate in the above-mentioned respective embodiments. However, the method has drawbacks with respect to manufacturing efficiency and a manufacturing cost. That is, in the method which manufactures the wrinkled plate using the support substrate, it is necessary to remove the hardened support substrate from the stretchable functional member after the support substrate is hardened. However, the support substrate and the stretchable functional member are brought into a closely adhered state due to the hardening of the support substrate and hence, the operation of removing the support base from the stretchable functional member is difficult. Further, it is necessary for the support substrate to ensure a certain amount of thickness and hence, to obtain a thin wrinkled plate, it is necessary to remove a bottom portion of the wrinkled plate acquired by the above-mentioned manufacturing method in the post treatment. Further, it is not also possible to reuse the removed portion in the manufacture of wrinkled plate.

Accordingly, in this embodiment, to manufacture the wrinkled plate more efficiently and at a low cost, in place of the method for manufacturing a wrinkled plate according to the above-mentioned respective embodiments, there is provided the method for manufacturing a wrinkled plate which includes the steps of: placing an intermediate layer which is extensible and shrinkable and is removable by post treatment on a stretchable functional member in a stretched state; adhering a sheet-shaped resilient member on an upper surface of the intermediate layer; forming wrinkles on the resilient member by shrinking the stretchable functional member; covering an upper surface of the resilient member with an unhardened lining material; and hardening the unhardened lining material.

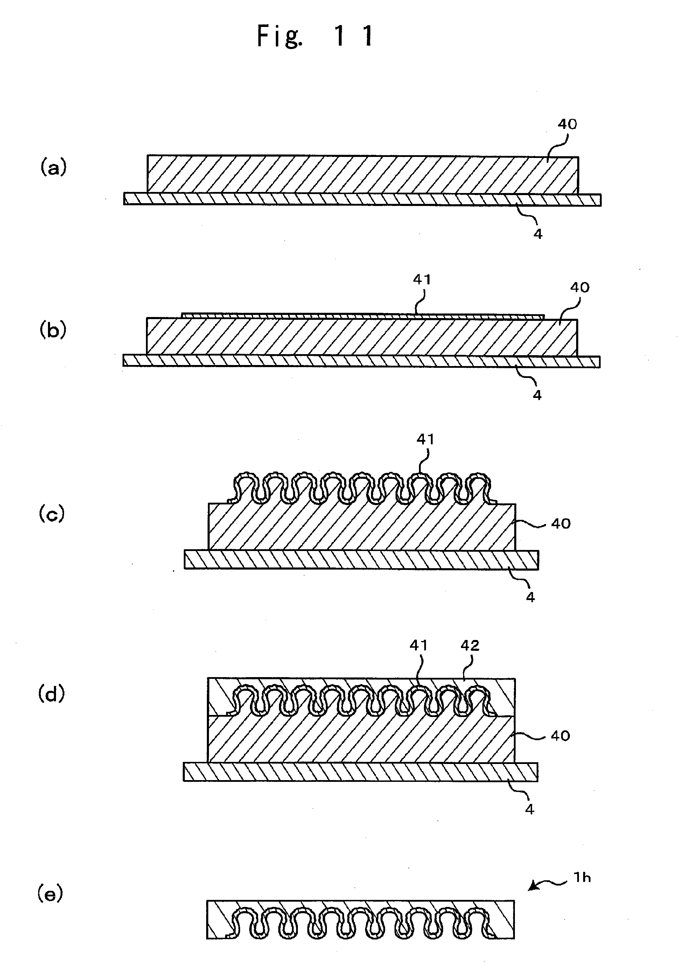

In this case, firstly, as shown in Fig. 11(a), an intermediate layer 40 is placed on an upper surface of a rubber sheet 4. The intermediate layer 40 is made of, in the same manner as the intermediate layer 20 of the embodiment 4, a material which is plastically deformable and is shrinkable by a force in the compression direction and is removable by post treatment. To be more specific, the intermediate layer 40 is made of any kind of water-soluble gel-like substance such as any kind of water-soluble glue including starch glue, a substance obtained by boiling and hardening agar or the like. However, mesh-like minute recessed portions are not formed on a surface of the intermediate layer 40. Next, as shown in Fig. 11(b), a sheet-shaped resilient member 41 is placed on the intermediate layer 40.

Here, to be more specific, the sheet-shaped resilient member may be formed using a synthetic resin film, a metal foil, paper or the like.

The intermediate layer 40 and the resilient member 41 are placed on an upper surface of the rubber sheet 4 with the rubber sheet 4 held in a stretched state as described previously, and the rubber sheet 4 is shrunken. As a result, as shown in Fig. 11(c), the intermediate layer 40 is shrunken while forming wrinkles on an upper surface thereof and, at the same time, the resilient member 41 which is formed on an upper surface of the intermediate layer 40 is also shrunken while forming wrinkles. Here, in the same manner as the respective embodiments described above, distal end portions of protruding portions which constitute the wrinkles formed on the resilient member 41 do not come into direct contact with each other.

Next, after forming the wrinkles on the resilient member 41, as shown in Fig. 11(d), an upper surface of the resilient member 41 is covered with a lining material 42.

The lining material 42 may be formed using a material which gradually increases viscosity thereof in the course of hardening such as a thermosetting resin, an ultraviolet-ray setting resin, an infrared-ray setting resin or clay.

The lining material 42 is hardened in a state where the large number of wrinkles are still formed on the resilient member 41 and, thereafter, the intermediate layer 40 is removed as shown in Fig. 11(e). This removal operation is carried out by spraying water to the resilient member 41 or by immersing the resilient member 41 into hot water (when the intermediate layer 40 is made of agar). In this manner, by removing the intermediate layer 40 from a lower surface of the resilient member 41, a wrinkled plate 1h which forms wrinkles thereon attributed to the shrinkage of the rubber sheet 4 is acquired. Here, the resilient member 41 and the intermediate layer 40 are not brought into a close contact state even when the lining material 42 is hardened and hence, the above-mentioned removal operation can be performed easily. Further, the formed wrinkled plate 1h is lined with the lining material 42 and hence, the wrinkled plate 1h can maintain a shape of wrinkles formed on the resilient member and, at the same time, can enhance strength thereof.

In this manner, according to the method for manufacturing a wrinkled plate of this embodiment, by applying the lining material 42 to the resilient member 41 after forming the wrinkles on the sheet-shaped resilient member 41, the wrinkled plate having a desired thickness can be acquired at a manufacturing stage so that it is unnecessary to perform an operation to remove undesired portions as the post treatment whereby manufacturing efficiency can be enhanced and, at the same time, a manufacturing cost can be suppressed. Further, it is sufficient that the resilient member 41 is a sheet-shaped member having resiliency and hence, the degree of freedom is high in the selection of the material of the resilient member 41 whereby it is possible to manufacture the wrinkled plates which conform to various applications. Further, the intermediate layer 40 can be recycled and hence, the wrinkled plate can be manufactured at a lower cost.

In the wrinkled plate 1h acquired by such a manufacturing method, a large number of irregular or untidy wrinkles attributed to protuberance are continuously formed on a surface of the wrinkled plate 1h, and a distance between neighboring wrinkles attributed to protuberance is set such that the distance at bottom portions of the wrinkles is larger than the distance at expanded portions of the wrinkles. Due to such structure, it is possible to provide the wrinkled plate which exhibits the excellent radio wave absorbing performance and the excellent soundwave absorbing performance.

The sheet-shaped resilient member 41 may have an irregular shape on a surface thereof. In this case, the sheet-shaped resilient member may be formed using a fabric which is formed by weaving carbon, metal or glass fibers or the like besides a synthetic resin film, a metal foil and paper. Here, with respect to a material which originally has no irregular shape on a surface thereof such as the synthetic resin film, the metal foil or paper, a predetermined irregular shape is formed on a surface of the resilient member 41 by pressing a feed roller or the like on which the predetermined irregular shape is formed.

In this manner, with the use of the sheet-shaped resilient member having the irregular shape on the surface thereof, it is possible to acquire the wrinkled plate where the wrinkles attributed to the shrinkage of the rubber sheet 4 are formed on the wrinkled plate 1h, and a large number of irregular shapes attributed to the irregularities preliminarily formed on the support substrate are formed on the surface of each wrinkle. Accordingly, with the use of the resilient member to which the irregularities of a desired shape are preliminarily applied, it is possible to acquire the wrinkled plate having irregularities of a desired shape. Further, at the time of shrinking the resilient member, the intermediate layer which is placed on the lower surface of the resilient member is also shrunken in the same manner and hence, it is possible to form the large number of wrinkles on the surface of the resilient member such that the wrinkles do not come into contact with each other thus forming the wrinkled plate into a shape useful as a radio wave absorber.

(Embodiment 6)

In the above-mentioned embodiments 1 to 3 or in the above-mentioned embodiments 5 and 6, the rubber sheet 4 is shrunken in one step and hence, the wrinkles having a relatively large waviness and the minute wrinkles attributed to the woven fabric 6 or the embossing plate 10 which are formed on the surface of each wrinkle are formed on the upper surface of the clay 5. However, in place of such shrinking of the rubber sheet 4, the rubber sheet 4 may be shrunken in multiple stages so as to further increase the number of wrinkles formed on the surface of the clay 5.

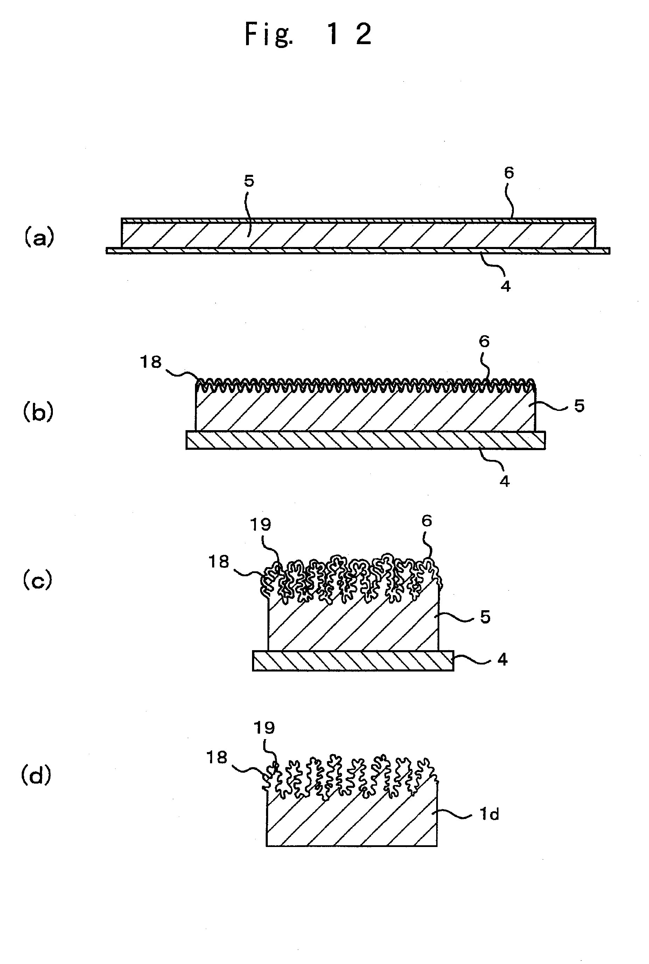

That is, in this embodiment, firstly, as shown in Fig. 12(a), the clay 5 is placed on the upper surface of the rubber sheet 4 in a stretched state and, thereafter, the woven fabric 6 is adhered to the upper surface of the clay 5.

Next, as shown in Fig. 12(b), wrinkles are formed on the upper surface of the clay 5 and the woven fabric 6 by shrinking the rubber sheet 4 halfway (sufficiently leaving a shrinkable margin yet). The wrinkles formed in this stage are small wrinkles (small pitch) since the clay 5 is still sufficiently soft (low viscosity). The wrinkles having such small waviness constitute first wrinkles 18.

When the first wrinkles 18 having such small waviness are formed on the upper surface of the clay 5 in this manner, the rubber sheet 4 is left in such a state (the state where the rubber sheet 4 is shrunken halfway) for some time thus slightly drying the clay 5 so as to slightly harden the clay 5 (so as to increase viscosity of the clay 5). When the clay 5 is slightly hardened, as shown in Fig. 12(c), the rubber sheet 4 is further shrunken slightly (leaving a sufficient shrinkable margin yet) . As a result, a force in the compression direction is further applied to the clay 5 in the state shown in Fig. 12(b) over the planar direction. The viscosity of the clay 5 is slightly increased in such a state and hence, the waviness of the wrinkles formed on the upper surface of the clay 5 based on the force in the compression direction is set larger (coarser in pitch) than the waviness of the first wrinkles 18. In this manner, the wrinkles having the large waviness constitute the second wrinkles 19. Since the first wrinkles 18 remain on the surface of the clay 5 as it is, on the surface of the clay 5, a composite wrinkle shape where the first wrinkles 18 are present on the surface of each second wrinkle 19 is formed, and a cross-sectional shape of the surface portion forms a fractal curve. Then, by hardening the clay 5 by baking, it is possible to acquire the wrinkled sheet 1d as shown in Fig. 12(d).

With respect to the surface of the wrinkled sheet 1d acquired in the above-mentioned manner, the first wrinkles 18 smaller than the second wrinkles 19 are formed on the surfaces of the second wrinkles 19 having the large waviness and, further, the wrinkles attributed to the irregularities of the woven fabric 6 are formed on the surfaces of the first wrinkles 18. That is, due to such a constitution, it is possible to form the more complicate-shaped wrinkles on the surface of the plate while controlling the shapes of the wrinkles formed on the surface of the plate.

(Embodiment 7)

In the above-mentioned respective embodiments, the surface of the support substrate or the resilient member may be covered with various kinds of coating materials after being hardened.

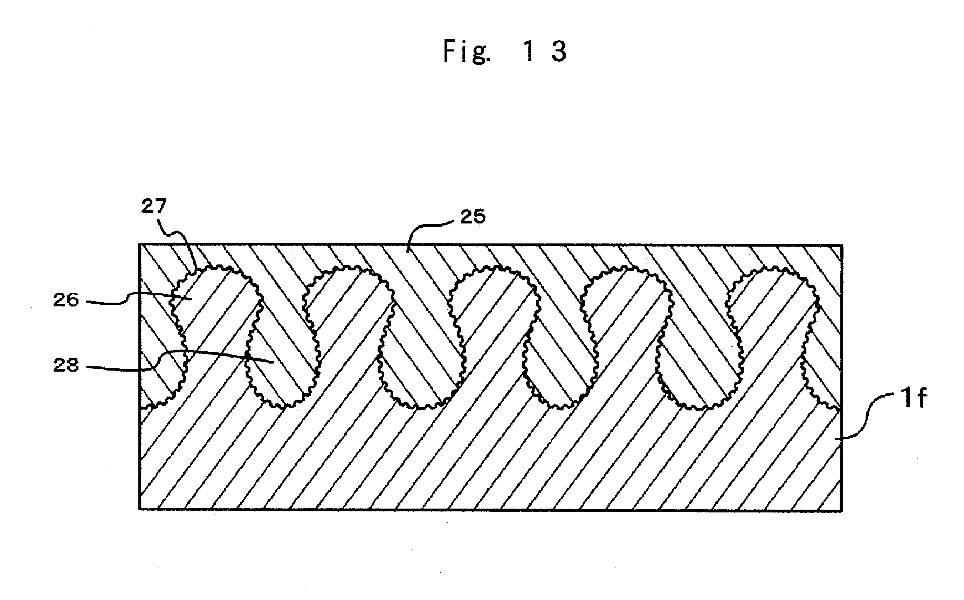

That is, after forming the wrinkled plate 1f by the manufacturing method according to any one of the above-mentioned embodiments, as shown in Fig. 13, wrinkles 26 and irregularities 27 formed on a surface of the wrinkled plate 1f and spaces 28 each of which is defined between the wrinkles 26 are covered with a coating material 25. Due to such a constitution, a shape of the surface of the wrinkled plate 1f can be formed into a shape which is not influenced by the wrinkles 26 or the like formed on the wrinkled plate 1f, and the strength of the wrinkled plate 1f can be increased. Accordingly, for example, by covering an upper surface of the wrinkled plate 1f with a radio wave permeable material which constitutes a coating material thus forming the surface of the wrinkled plate 1f into an approximately flat smooth face, it is possible to prevent smear from being adhered to the wrinkled plate 1f. Therefore, the wrinkled plate 1f is effectively applicable to a radio wave absorbing and insulating wall which prevents a medical device from being erroneously operated due to the influence of a radio wave exerted on the medical device.

Here, as the radio wave permeable material, an FRP (Fiber Reinforced Plastic) resin, a GFRP (Glass Fiber Reinforced Plastic) resin or the like may preferably be used as a material.

Further, by covering the upper surface of the wrinkled plate 1f with a foamed resin material such as foamed styrene or foamed urethane as a covering material, it is possible to effectively use the wrinkled plate 1f as an acoustic insulation wall of a drawing room of an ordinary household or an audio room.

(Embodiment 8)

Further, in the above-mentioned respective embodiments, wrinkles may be formed on the surface of the support substrate such that minute particles are adhered to the surface of the unhardened support substrate and, thereafter, the stretchable functional member is shrunken so as to form the wrinkles.

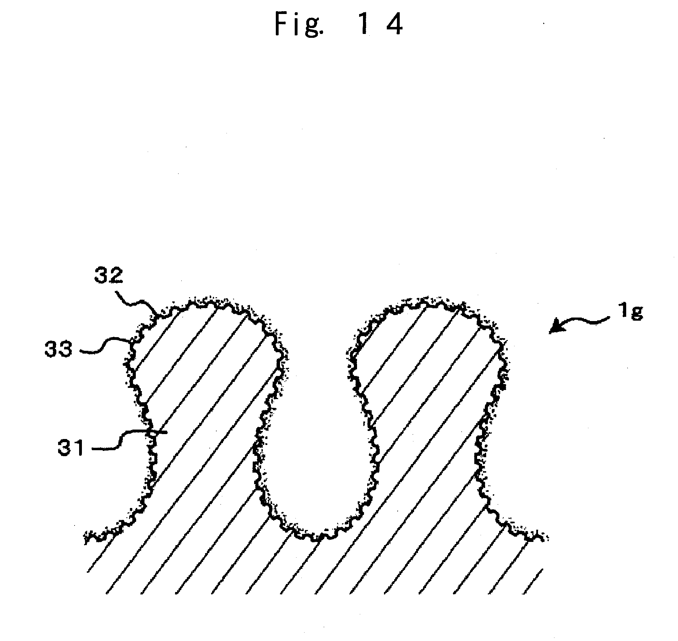

That is, for example, the unhardened clay 5 is placed on the rubber sheet 4 in a stretched state, and the woven fabric 6 is adhered to an upper surface of the unhardened clay 5 and minute particles are also adhered to the upper surface of the unhardened clay 5. Here, the minute particles are resin-made or metal-made minute particles, and it is desirable to use a material which is not vanished by baking. Then, wrinkles are formed on the upper surface of the clay 5 and the woven fabric 6 by shrinking the rubber sheet 4 and, thereafter, the composite is baked thus forming a wrinkled plate 1g shown in Fig. 14. By forming the wrinkled plate 1g in this manner, on the surface of the wrinkled plate 1g, wrinkles 31 formed by the shrinkage of the rubber sheet 4, minute irregularities 32 formed by the woven fabric 6 and more minute irregularities 33 formed by the minute particles are formed.

Due to such a constitution, a surface shape of the wrinkled plate becomes further complicated and hence, a radio wave which is incident on the wrinkled plate is reflected at random whereby it is possible to acquire the wrinkled plate having the further improved radio wave absorbing performance.

Here, instead of adhering the minute particles to the surface of the unhardened support substrate as described above, the minute particles may be mixed into the unhardened support substrate preliminarily. Due to such a constitution, the wrinkled plate can acquire not only advantageous effects substantially equal to the above-mentioned advantageous effects but also an advantageous effect that time and efforts necessary for adhering the minute particles to the upper surface of the unhardened support substrate can be saved thus enhancing the production efficiency. Further, by mixing particles having a relatively large particle size and particles having a relatively small particle size in the unhardened support substrate, it is possible to form the more minute irregularities due to these particles on the upper surface of the support substrate after the support substrate is hardened so that the radio wave absorbing performance of the wrinkled plate can be further enhanced.

Although some of the embodiments of the present invention have been explained in detail in conjunction with the drawings, these are provided only as examples, and can be carried out in other modes which adopt various modifications and improvements based on knowledge of those who are skilled in the art.

For example, in the above-mentioned respective embodiments, the rubber sheet is used as the stretchable functional member. However, it is sufficient for the stretchable functional member to have a stretchable function and hence, for example, a thermo shrinkable film, a shape memory alloy, a shape memory resin or the like can be used as the stretchable functional member.

Further, the stretchable functional member may be formed of, besides the above-mentioned stretchable functional member which is stretched or shrunken attributed to physical property which the material possesses, a member which is mechanically shrunken and stretched such as a stop device of a camera which performs a shrinking operation by sliding a plurality of throttle blades arranged along a periphery of a substrate formed in an approximately circular shape toward the center of the substrate. When the member which is mechanically shrunken and stretched is used as the stretchable functional member, it is possible to enhance the production efficiency and, at the same time, it is possible to manufacture wrinkled plates which exhibit small individual differences.

**Claims**

1. A method for manufacturing a wrinkled plate comprising the steps of:

    placing an unhardened support substrate having irregularities embossed on a surface thereof on an upper surface of a stretchable functional member in a stretched state in an overlapping manner; and
    forming wrinkles at least on a surface of the support substrate by shrinking the stretchable functional member; and
    hardening the support substrate.

2. The method for manufacturing a wrinkled plate according to claim 1, wherein embossing of the irregularities is performed by adhering a woven fabric to the upper surface of the unhardened support substrate.

3. The method for manufacturing a wrinkled plate according to claim 1, wherein embossing of the irregularities is performed by pressing an embossing plate on which irregularities are preliminarily formed to the upper surface of the unhardened support substrate.

4. The method for manufacturing a wrinkled plate according to any one of claims 1 to 3, wherein the step of forming wrinkles at least on a surface of the support substrate by shrinking the stretchable functional member comprises: a step of semi-hardening the unhardened support substrate; and a step of forming first wrinkles on the upper surface of the semi-hardened support substrate by shrinking the stretchable functional member halfway; and a step of forming second wrinkles larger than the first wrinkles on the surface of the support substrate by further shrinking the stretchable functional member.

5. A method for manufacturing a wrinkled plate comprising the steps of:

placing an unhardened support substrate to which an irregular surface sheet having irregularities preliminarily formed thereon is adhered on an upper surface of a stretchable functional member in a stretched state in an overlapping manner; and
forming wrinkles at least on a surface of the support substrate by shrinking the stretchable functional member; and
hardening the support substrate.

6. The method for manufacturing a wrinkled plate according to any one of claims 1 to 5, wherein the support substrate is made of clay.

7. A method for manufacturing a wrinkled plate comprising the steps of:

interposing an intermediate layer which is extensible and shrinkable, is removable by post treatment and has an irregular shape projecting toward the support substrate on a surface thereof between a stretchable sheet in a stretched state and an unhardened support substrate which is placed on an upper surface of the stretchable sheet in an overlapping manner;
forming wrinkles at least on a surface of the support substrate by shrinking the stretchable sheet; and
hardening the support substrate.

8. The method for manufacturing a wrinkled plate according to any one of claims 1 to 7, wherein the surface of the support substrate is covered with a coating material.

9. A method for manufacturing a wrinkled plate comprising the steps of:

placing an intermediate layer which is extensible and shrinkable and is removable by post treatment on a stretchable functional member in a stretched state;
adhering a sheet-shaped resilient member on an upper surface of the intermediate layer;
forming wrinkles on the resilient member by shrinking the stretchable functional member;
covering an upper surface of the resilient member with an unhardened lining material; and
hardening the unhardened lining material.

10. A wrinkled plate in which a large number of irregular wrinkles attributed to protuberance are continuously formed at least on a surface of the wrinkled plate, a large number of minute irregularities are formed on a surface of each wrinkle, and a distance between the neighboring wrinkles of the large number of wrinkles attributed to protuberance is set such that the distance at bottom portions of the wrinkles is larger than the distance at expanded portions of the wrinkles.

# Fig. 1

(a)

(b)

(c)

(d)

# Fig. 2

# Fig. 3

Fig. 4

Fig. 5

Fig. 6

Fig. 7

# Fig. 8

(a)

(b)

(c)

# Fig. 9

(a)

(b)

(c)

(d)

Fig. 1 0

1e

24

23

23

# Fig. 1 1

(a)

(b)

(c)

(d)

(e)

# Fig. 1 2

(a)

(b)

(c)

(d)

Fig. 1 3

EP 2 246 166 A1

# Fig. 1 4

## INTERNATIONAL SEARCH REPORT

| International application No. |
| --- |
| PCT/JP2009/050960 |

**A. CLASSIFICATION OF SUBJECT MATTER**
*B28B1/00*(2006.01)i, *B28B11/08*(2006.01)i, *B29C33/40*(2006.01)i, *B29C41/02* (2006.01)i

According to International Patent Classification (IPC) or to both national classification and IPC

**B. FIELDS SEARCHED**

Minimum documentation searched (classification system followed by classification symbols)
B28B1/00, B28B11/08, B29C33/40, B29C41/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2006-7475 A (Mitsuko ITO),<br>12 January, 2006 (12.01.06),<br>Claims; Par. Nos. [0032] to [0039]; Fig. 2<br>(Family: none) | 10<br>1-9 |
| A | JP 2004-261964 A (Mitsuko ITO),<br>24 September, 2004 (24.09.04),<br>Claims; drawings<br>& WO 2004/065084 A1    & EP 1595664 A1<br>& US 2005/0280183 A1 | 1-10 |
| A | WO 2007/138887 A1 (Kao Corp.),<br>06 December, 2007 (06.12.07),<br>Claims; drawings<br>& EP 2022878 A1 | 1-10 |

☐ Further documents are listed in the continuation of Box C.    ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 17 April, 2009 (17.04.09) | 28 April, 2009 (28.04.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004261964 A

- JP 2006007475 A